# EUROPEAN PATENT SPECIFICATION

(11) **EP 1 926 547 B1**
(45) Date of publication and mention of the grant of the patent: **14.10.2009**
(21) Application number: 07776937.0
(22) Date of filing: 09.05.2007
(51) Int. Cl.: B01D 69/12, B01D 69/14, B01D 67/00

(54) **POROUS COMPOSITE MEMBRANE MATERIALS AND APPLICATIONS THEREOF**
PORÖSE MATERIALZUSAMMENSATZUNGEN FÜR MEMBRANEN UND ZUGEHÖROGE ANWENDUNGEN
MATÉRIAUX COMPOSITES POREUX POUR MEMBRANES ET LEURS APPLICATIONS

(30) Priority: 09.05.2006 US 799135 P
(43) Date of publication of application: 04.06.2008
(73) Proprietor: Porex Corporation, Fairburn, GA 30213 (US)
(72) Inventor: RAMSEY, Thomas, H., Peachtree City, Georgia 30269 (US); MAO, Guoqiang, Smyrna, Georgia 30082 (US); CLENDENNING, Michael, Andrew, Newnan, Georgia 30265 (US); WALTON, Alan, Peachtree City, Georgia 30269 (US); RANEY, Jerry, Dean, Smyrna, Georgia 30080 (US); SHORE, Jacob, Lexington, Massachusetts 02420 (US)
(74) Representative: Dey, Michael
(86) International application number: PCT/US2007/011252
(87) International publication number: WO 2007/133609

(56) References cited:
- WO-A-99/47246
- WO-A-20/04092076
- WO-A-20/05047857
- US-A- 4 761 232
- US-A1- 2004 238 440
- US-B1- 6 596 112

## Description

### FIELD OF THE INVENTION

The present invention relates to porous composite materials.

### BACKGROUND OF THE INVENTION

Porous materials find application in a number of areas, including filtration. Microfiltration, ultrafiltration, nanofiltration, and reverse osmosis are examples of processes in which porous materials, including porous membranes, can be used.

Microfiltration processes are generally used in applications in which relatively small particles are to be removed from a fluid stream. Applications suited for microfiltration include, but are not limited to, water and waste water treatment, dust collection, and fine particle and bacteria removal for pharmaceutical and microelectronic applications.

Ultrafiltration is a pressure driven membrane process operable to effectuate separation of components in a fluid stream on the basis of molecular size and shape. Under an applied pressure, solvent and small solute species of a fluid pass through a membrane while larger solute species are retained by the membrane. Typical applications for ultrafiltration include pretreatment of salt water in desalinization plants, virus removal for pharmaceutical applications, treatment of wastewater for reuse as process water, and oil water separations.

Reverse osmosis has found application in the purification of concentrated solutions comprising high levels of dissolved ions, such as salts. In reverse osmosis, pressure is applied to a concentrated solution on one side of a semipermeable membrane. The result is the production of a purified permeate on the other side of the membrane.

Due to high pressures and other demanding physical conditions, porous materials used in filtering applications often comprise composite materials having a porous substrate and a porous membrane disposed on the substrate. The substrate provides the porous composite with mechanical properties sufficient to withstand demanding physical conditions while the membrane provides a suitable medium for effectuating filtering processes.

In forming a porous composite material for filtering applications, a membrane can be cast onto a substrate. In many instances, the membrane is constructed of one material and the substrate is made of a different material. The casting of a membrane comprising one material onto a substrate made of a different material can yield composites having poor mechanical properties, especially when the membrane and substrate materials have different solubilities in the casting solvent or exhibit different thermal properties. Membrane surfaces produced from combination of dissimilar materials are often not uniform resulting in wide pore size distributions which can compromise the properties of the porous composite.

Combination of dissimilar materials can additionally affect the attachment or adhesion of a membrane to a substrate. Membranes and substrates possessing incongruent surface energies and/or chemical compatibilities generally have poor adhesion to one another which can generate significant voids at the interface of the membrane and substrate. Poor adhesion can additionally be attributed to differing thermal properties of a membrane and substrate leading to tension at their interface. Interfacial tension between a membrane and substrate can result in membrane detachment and surface cracking.

The vulnerability of existing membrane-substrate composite materials to membrane detachment and degradation is further accentuated by the high pressures used in many filtration processes. Membrane detachment can additionally be precipitated by the frequent application of pressure used to backflush or backwash a filtration system.

In view of the foregoing problems, it would be desirable to provide porous composite materials comprising dissimilar materials which are resistant to degradation. It would additionally be desirable to provide methods for producing and using such porous composite materials.

WO 2005/047857 discloses a porous composite material, the support structure made by sintering. The support can comprise different materials such as PVDF.

WO 99/47246 A discloses a porous composite material comprising a non-woven bicomponent fiber scrim comprising polypropylene which is impregnated with a polyamide polymer to form a middle layer, said substrate comprising a polyamide coating.

US 2004/238440 A1 discloses a filter made from sintered porous plastic. As a first component, PVDF is disclosed while a second fibrous particle is made of polyethylene.

US 6,596,112 B1 discloses a composite material comprising a bicomponent support layer sandwiched between two membrane layers.

### SUMMARY

The present invention provides porous composites comprising dissimilar materials, which are resistant to degradation. In embodiments of the present invention, porous composite materials comprise porous substrates having various materials, such as porous membranes, attached thereto.

Materials are attached to surfaces of sintered porous substrates of the present invention by forming one or a plurality of points of attachment with particles and/or fibers dispersed throughout the porous substrate. Particles and/or fibers dispersed throughout the porous substrate are chemically the same or similar to the material disposed on surfaces of the porous substrate. However, particles and/or fibers forming points of attachment are chemically dissimilar to the matrix of the porous substrate in which they are dispersed. Materials, such as a porous membrane, forming one or a plurality of points of attachment with particles and/or fibers dispersed throughout the porous substrate, can find enhanced stability and resistance to degradative forces such as pressure and mechanical agitation.

Moreover, dispersing particles and/or fibers in the matrix of a chemically dissimilar porous substrate and attaching chemically similar materials to the particles and/or fibers can permit the combination of an inexpensive porous substrate with expensive membrane materials to produce various filtration apparatus.

A porous composite material comprises a porous substrate according to claim 1.

In some embodiments, a porous substrate can comprise a plurality of particles or fibers of a second polymeric material. Moreover, the first polymeric material, in some embodiments, comprises a plurality of particles or a plurality of fibers.

In the present invention, the third polymeric material has one or a plurality of points of attachment to at least one particle or fiber of a second polymeric material in the porous substrate. In some embodiments, a third polymeric material has at least one point of attachment with each of a plurality of particles or fibers. Points of attachment, according to embodiments of the present invention, comprise physical interactions and/or chemical bonds, including covalent bonds, ionic bonds, or combinations thereof, such that an interface or boundary is not defined between the materials forming the point of attachment, and materials forming the point of attachment are continuous with one another. Physical interactions, according to some embodiments of the present invention, comprise physical bonds and/or entanglement between two materials, such the entanglement of chains of two or more polymeric materials.

Moreover, in some embodiments of the present invention, a third polymeric material comprises a porous membrane having an average pore size less than or equal to the average pore size of the porous substrate. In such embodiments, a third polymeric material comprising a porous membrane can provide the porous substrate with a secondary pore structure leading to enhanced filtration properties.

In another aspect, the present invention also provides methods of making porous composite materials according to claim 15. In one embodiment, a method of making a porous composite material comprises providing a sintered porous substrate comprising a first polymeric material and at least one particle or fiber of a second polymeric material, providing a solution comprising a third polymeric material dissolved in a solvent, applying the solution to the porous substrate, and forming at least one point of attachment between the third polymeric material and the at least one particle or fiber of the second polymeric material. In some embodiments, the second polymeric material of the at least one particle or fiber is also soluble in the solvent and is at least partially dissolved by application of the solution comprising the solvent and third polymeric material to the substrate.

In a further aspect, the present invention provides methods of filtering a fluid. In one embodiment, a method for filtering a fluid comprises providing a filter, the filter comprising a sintered porous substrate comprising a first polymeric material and at least one particle or fiber of a second polymeric material. A third polymeric material is disposed on at least one surface of the substrate and has at least one point of attachment to the at least one particle or fiber of the second polymeric material. A fluid is passed through the filter.

### BRIEF DESCRIPTION OF THE DRAWINGS

Figure 1 displays a scanning electron microscopy image of a cross section of a porous composite material according to an embodiment of the present invention at a magnification of x1,000.
Figure 2 displays a scanning electron microscopy image of a cross section of a porous composite material according to an embodiment of the present invention at a magnification of x5,500.
Figure 3 displays a scanning electron microscopy image of a porous membrane binding to a particle in a porous substrate according to an embodiment of the present invention at a magnification of x8,500.
Figure 4 displays a scanning electron microscopy image of a cross section of a porous composite material according to an embodiment of the present invention at a magnification of x1,200.
Figure 5 displays a scanning electron microscopy image of a cross section of a porous composite material according to an embodiment of the present invention at a magnification of x500.
Figure 6 displays a scanning electron microscopy image of a cross section of a porous composite material according to an embodiment of the present invention at a magnification of x3,000.
Figure 7 displays a scanning electron microscopy image of a cross section of a porous composite material according to an embodiment of the present invention at a magnification of x400.

### DETAILED DESCRIPTION

The present invention provides porous composites comprising dissimilar materials, which are resistant to degradation. In embodiments of the present invention, porous composite materials comprise porous substrates having various materials, such as porous membranes, attached thereto.

Materials are attached to surfaces of porous substrates of the present invention by forming one or a plurality of points of attachment with particles and/or fibers dispersed throughout the porous substrate. Particles and/or fibers dispersed throughout the porous substrate are chemically the same or similar to the material disposed on surfaces of the porous substrate. However, particles and/or fibers forming points of attachment are chemically dissimilar to the matrix of the porous substrate in which they are dispersed. Materials, such as a porous membrane, forming one or a plurality of points of attachment with particles and/or fibers dispersed throughout the porous substrate, can find enhanced stability and resistance to degradative forces such as pressure and mechanical agitation.

Moreover, dispersing particles and/or fibers in the matrix of a chemically dissimilar porous substrate and attaching chemically similar materials to the particles and/or fibers can permit the combination of an inexpensive porous substrate with expensive membrane materials to produce various filtration apparatus.

A porous composite material of the present invention comprises a sintered porous substrate comprising a first polymeric material and at least one particle or fiber of a second polymeric material and a third material disposed on at least one surface of the porous substrate and having at least one point of attachment to the at least one particle or fiber of the second polymeric material, wherein the third polymeric material does not form a point of attachment with the first polymeric material.

### I. Porous Composite Materials Comprising Binding Particles

As provided herein, in some embodiments, a porous composite material comprises a porous substrate comprising a first material and at least one particle of a second material and a third material disposed on at least one surface of the porous substrate and having at least one point of attachment to the at least one particle of the second material. In such embodiments, the at least one particle of the second material operates to bind or adhere the third material to the porous substrate. A third material, in some embodiments of the present invention, comprises a porous membrane. When bound or adhered to the porous substrate through interaction with one or more of the particle of the second material, a third material comprising a porous membrane is operable to provide the porous substrate with a secondary pore structure. The secondary pore structure provided by a membrane of the third material can be smaller or larger than the corresponding pore structure of the porous substrate. As a result, a third material comprising a membrane can provide a porous substrate with enhanced filtration capabilities.

In some embodiments, a porous substrate comprises a plurality of particles of a second material. In such embodiments, the particles of the second material can be dispersed throughout the first material of the porous substrate.

The first material of a porous substrate comprises a polymeric material. Polymeric materials suitable for use as the first material can comprise fluoropolymers, polyamides, polyethylenes, polypropylenes, polyesters, polyacrylonitriles, polyether imides, polyetherether ketones, polysulfones, polyethersulfones, polyvinyl chlorides, or copolymers or combinations thereof. Polyethylene, in one embodiment, comprises HDPE. HDPE, as used herein, refers to polyethylene having a density ranging from about 0.92 g/cm³ to about 0.97 g/cm³. In some embodiments, HDPE has a degree of crystallinity (% from density) ranging from about 50 to about 90. In another embodiment, polyethylene comprises UHMWPE. UHMWPE, as used herein, refers to polyethylene having a molecular weight greater than 1,000,000.

In some embodiments, the first material of a porous substrate can comprise a high melt flow index polymer and thermally conductive material as set forth in United States Patent Application Serial No. 10/978,449.

Particles of a second material of a porous substrate comprise a polymeric material. Polymers suitable for use as a second material, in some embodiments, comprise fluoropolymers, polyamides, polyethersulfones, polystyrenes, polyethylenes, polypropylenes, polyesters, polyacrylonitriles, polyether imides, polyetherether ketones, polysulfones, polyvinyl chlorides, and copolymers and combinations thereof. In one embodiment, for example, the second material comprises PVDF.

Particles of a second material comprising a polymeric material can be in the form of flakes, ground particles, micropelletized particles, powder, or combinations thereof. In some embodiments, micropelletized particles can have a diameter of about 0.060 inches or less and can be produced in accordance with the methods described in United States Patent No. 6,030,558.

First and second materials of a porous substrate, in embodiments of the present invention, are selected to differ from one another. A porous substrate in one embodiment, for example, comprises an UHMWPE or HDPE first material and at least one particle of a PVDF second material. In another embodiment, a porous substrate comprises a HDPE first material and at least one particle of a polyamide second material. In other embodiments, a porous substrate comprises a HDPE first material and at least one particle of a polysulfone second material. In some embodiments, a porous substrate comprises a HDPE first material and at least one particle of a polyethersulfone second material. In another embodiment, a porous substrate comprises a polypropylene first material and at least one particle of a PVDF second material. Embodiments of the present invention contemplate any combination of polymers suitable for use as first and second materials in the production of a porous substrate.

In a further embodiment, a porous substrate comprises a first material comprising a high melt flow index polymer and thermally conductive material as set forth in United States Patent Application Serial No. 10/978,449 and at least one particle of a second material. A thermally conductive material in the porous substrate can eliminate or at least dissipate static electricity on the substrate and porous composite material.

Porous substrates, according to some embodiments, comprise about 95 weight percent of a first material and about 5 weight percent particles of a second material. In other embodiments, a porous substrate comprises from about 5 to about 50 weight percent particles of a second material. In another embodiment, a porous substrate comprises greater than 50 weight percent particles of a second material. In a further embodiment, a porous substrate comprises less than 5 weight percent particles of a second material.

In some embodiments, a porous substrate comprising a first material and at least one particle of a second material has an average pore size ranging from about 1 µm to about 200 µm, from about 2 µm to about 150 µm, from about 5 µm to about 100 µm, or from about 10 µm to about 50 µm. A porous substrate, in another embodiment, has an average pore size less than about 1 µm. In one embodiment, a porous substrate has an average pore size ranging from about 0.1 µm to about 1 µm. In a further embodiment, a porous substrate has an average pore size greater than about 200 µm. In an embodiment, a porous substrate has an average pore size ranging from about 200 µm to about 500 µm. Average pore sizes of substrates can be determined using mercury porosimetry or scanning electron microscopy (SEM).

In addition to average pore size, porous substrates comprising a first material and at least one particle of a second material, according to some embodiments, have an average porosity of at least 20%. In other embodiments, porous substrates has an average porosity of at least 30%, at least 40%, at least 50%, at least 60%, or at least 75%. In a further embodiment, a porous substrate has an average porosity of at least 85%.

Porous substrates comprising a first material and at least one particle of a second material, in some embodiments of the present invention, have a thickness ranging from about 100 µm to about 10 cm. In other embodiments, porous substrates have a thickness ranging from about 250 µm to about 5 cm, from about 400 µm to about 1 cm, from about 600 µm to about 1 mm, or from about 700 µm to about 900 µm. In another embodiment, a porous substrate comprising a first material and at least one particle of a second material has a thickness less than about 100 µm. In a further embodiment, a porous substrate has a thickness greater than about 10 cm.

A variety of methods known to one of skill in the art can be used to make porous substrates of the present invention. Some examples include sintering, as disclosed by U.S. Pat. No. 6,030,558; the use of blowing agents and/or leaching agents; microcell formation methods, as disclosed by U.S. Pat. Nos. 4,473,665 and 5,160,674; drilling, including laser drilling; and reverse phase precipitation. Depending on its method of production, a porous substrate can have regular arrangements of channels of random or well-defined diameters and/or randomly situated pores of varying shapes and sizes.

In some embodiments, a porous substrate comprising a first material and at least one particle of a second material is produced by co-sintering particles of a first material and at least one particle of a second material. In one embodiment, for example, particles of a first material are mixed with particles of a second material in a desired ratio (weight percent) to produce a relatively uniform dispersion. Mixing particles of a first material and particles of a second material, in some embodiments is accomplished by tumbling techniques, vibration techniques, or combinations thereof. The dispersion is subsequently sintered to produce a porous substrate. In embodiments wherein particles of a first material and/or second material comprise a polymeric material, the particles can be in the form of flakes, ground particles, micropelletized particles, powder, or combinations thereof.

The first material and second material comprising polymeric materials, sintering temperatures and times are dependent upon the identities of the polymeric materials selected. In some embodiments, particles of a first polymeric material and at least one particle of a second polymeric material are sintered at a temperature ranging from about 200°F to about 700°F. Moreover, particles of a first polymeric material and at least one particle of a second polymeric material, in some embodiments, are sintered for a time period ranging from about 30 seconds to about 30 minutes. In other embodiments, particles of a first polymeric material and at least one particle of a second polymeric material are sintered for a time period ranging from about 1 minute to about 15 minutes or from about 5 minutes to about 10 minutes. In some embodiments, the sintering process comprises heating, soaking, and/or cooking cycles.

In some embodiments wherein a porous substrate is produced by co-sintering particles of a first material and at least one particle of a second material, the at least one particle of the second material can have an average size greater than or equal to the average size of particles of the first material. In other embodiments, the at least one particle of a second material can have an average size less than the average size of particles of the first material.

Depending on the desired size and shape of the final product (e.g., a block, tube, cone, cylinder, sheet, or film), sintering can be accomplished using a mold or other techniques known to those skilled in the art. Porous substrates and composite materials of the present invention can be produced in any desired shape including blocks, tubes, stars, cones, cylinders, sheets, films, and cartridges, including radial filter cartridges such as those disclosed in United States Patent 7,125,490.

In an embodiment, a mixture comprising polymeric particles of a first material and at least one particle of a second polymeric material is sintered in a mold. Suitable molds are commercially available and are known to those skilled in the art. Specific examples of molds include, but are not limited to, flat sheets with a thickness of greater than about 0.01 inch (254 µm), flat sheets with a thickness of up to about 1 inch (2.54 cm), flat sheets with a thickness of from about 0.01 inch (254 µm) to about 1 inch (2.54 cm), and round cylinders of varying heights and diameters. Suitable mold materials include, but are not limited to, metals and metal alloys, such as aluminum and stainless steel, and high temperature thermoplastics.

In one embodiment, a compression mold is used to provide a sintered porous substrate comprising particles of a first polymeric material and at least one particle of a second polymeric material. In such an embodiment, the mold is heated to the sintering temperature of the first polymeric material and subjected to pressure. In general, the greater the pressure applied to the mold, the smaller the average pore size and the greater the mechanical strength of the final product. The duration of time during which the pressure is applied also varies depending on the desired porosity of the final product.

Once the porous substrate has been formed, the mold is allowed to cool. If pressure has been applied to the mold, the cooling can occur while pressure is still being applied or after pressure has been removed. The sintered porous substrate is then removed from the mold and optionally processed. Examples of optional processing include, but are not limited to, sterilizing, cutting, milling, polishing, encapsulating, and/or coating.

In some embodiments, particles of the second material are dispersed throughout a matrix formed by the first polymeric material during the sintering process. Due to physical and/or chemical dissimilarities, particles of the second material, in some embodiments, form interfacial boundaries with the matrix of the first material. Moreover, in some embodiments, particles of the second material do not form physical and/or chemical bonds, including ionic and/or covalent bonds, with the matrix of the first material.

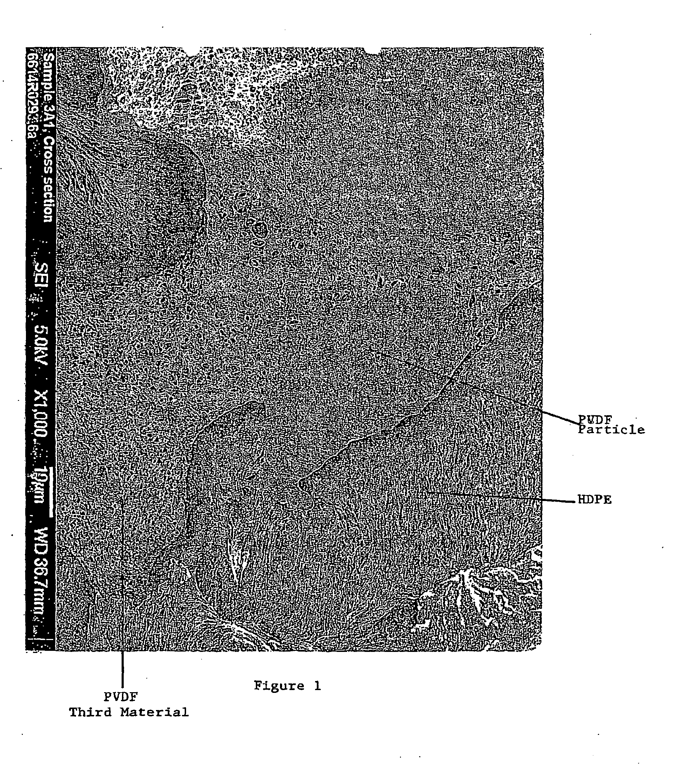

Figure 1 displays a scanning electron microscopy (SEM) image at a magnification of x1,000 of a composite material according to an embodiment of the present invention illustrating a sintered porous substrate comprising a first material and at least one particle of a second material. The first material of the porous substrate illustrated in Figure 1 comprises HDPE, and the particles of a second material embedded therein comprise PVDF. As shown in Figure 1, the PVDF particle (center) does not form any points of attachment with the HDPE matrix (upper right and right). A continuous interfacial boundary exists between the PVDF particle and HDPE matrix. Although the PVDF particle does not form any points of attachment with the HDPE matrix, the PVDF remains locked into the matrix by the sintering process with HDPE particles. In contrast, the PVDF particle forms a plurality of points of attachment with a porous PVDF third material (center) disposed on the porous substrate.

In addition to porous substrates comprising a first material and at least one particle of a second material, porous composite materials of the present invention comprise a third material disposed on at least one surface of the porous substrate, wherein the third material has at least one point of attachment to at least one particle of a second material in the porous substrate. In some embodiments, a third material can be present in at least some of the pores of the porous substrate. In other embodiments, a third material can be present in some or all the pores of the porous substrate. Moreover, in some embodiments, a third material comprises a porous membrane having an average pore size less than or equal to the average pore size of the porous substrate. In such embodiments, a third material comprising a porous membrane can provide the porous substrate with a secondary pore structure leading to enhanced filtration properties.

A third material comprises a polymeric material. Polymeric materials suitable for use as a third material, in some embodiments, comprise fluoropolymers including PVDF, polyamides, polyethersulfones, polystyrenes, polyethylenes, polypropylenes, polyesters, polyacrylonitriles, polyether imides, polyetherether ketones, polysulfones, polyethersulfones, polyvinyl chlorides, or copolymers or combinations thereof. A third material, according to embodiments of the present invention, is selected to differ from the first material of the porous substrate.

In some embodiments, a third material comprises pores having an average size ranging from about 0.2 nm to about 10 µm. In other embodiments, a third material comprises pores having an average size ranging from about 0.01 µm to about 5 µm, from about 0.1 µm to about 2 µm, or from about 0.5 µm to about 1 µm. In some embodiments, the average pore size of a third material is at least an order of magnitude less than the average pore size of the porous substrate.

In some embodiments, a third material comprises a thickness ranging from about 10 µm to about 10 mm. In other embodiments, a third material has a thickness ranging from about 25 µm to about 1 mm, from about 50 to 500 µm, from about 75 to 400 µm, or from about 100 µm to about 300 µm. In a further embodiment, a third material has a thickness less than about 10 µm. In some embodiments, a third material has a thickness less than the thickness of the porous substrate on which the third material is disposed.

As provided herein, a third material, according to some embodiments, can serve as a membrane operable for filtering applications such as, but not limited to, micro filtration, ultrafiltration, and nanofiltration. In such embodiments, a third material can provide a porous substrate the requisite pore size and/or structure sufficient for performing microfiltration, ultrafiltration, or nanofiltration processes.

In some embodiments of the present invention, a third material is disposed on at least one surface of a porous substrate comprising a first material and at least one particle of a second material and has at least one point of attachment to the at least one particle. In some embodiments, the third material can comprise a plurality of points of attachment to at least one particle of a second material. In other embodiments, a third material can be continuously attached to at least one particle of a second material.

In some embodiments, a porous substrate comprises a plurality of particles of a second material. In such embodiments, a third material can have at least one point of attachment with at least one of the plurality of particles. In other embodiments, the third material can have a plurality of points of attachment with at least one of the plurality of particles. In another embodiment, the third material can have at least one point of attachment with more than one of the plurality of particles. In a further embodiment, the third material can comprise a plurality of points of attachment with more than one of the plurality of particles. A third material, for example, can have a plurality of points of attachment with each of two or more particles.

In order to facilitate formation of at least one point of attachment, in some embodiments, a third material and particles of a second material can comprise the same material. In one embodiment, for example, the third material and second material comprise the same polymer or copolymer.

In another embodiment, to facilitate formation of at least one point of attachment, a third material and particles of a second material comprise materials from the same family. A third material and second material, in some embodiments, comprise polymers from the same family. Polymers from the same family, in embodiments of the present invention, comprise or are formed from related monomers (e.g. A and A'). For the purposes of this application, for example, poly(methyl methacrylate) and poly(ethyl methacrylate) are so described because their constituent monomers are related, differing only in the number of carbon atoms in their ester group, as are poly(methyl methacrylate) and polymethacrylate, differing only in the presence or absence of a methyl substituent. In connection with copolymers from the same polymer family, each copolymer is formed from a related monomer. For example, a copolymer comprising monomers A and B is in the same polymer family as a copolymer comprising monomers A' and C since monomers A and A' are structurally related.

Polymer families are known in the art. Polymer text books often identify such "polymer families" formed from similar monomers. For example, in F. W. Billmeyer, Jr., Textbook of Polymer Science (Wiley-Interscience, New York, 2nd ed. 1971), polyolefins, polystyrenes, acrylics, poly(vinyl esters), chlorine-containing polymers (e.g., PVC), fluoropolymers, polyamides, ether and acetal polymers, polyesters, polyurethanes, and cellulosics are each disclosed as a separate polymer family. Chemical encyclopedias often identify such "polymer families" as well. For example, the Kirk-Othmer Encyc. of Chem. Technol. (4th ed. 1991-1998) has separate listings for many types of polymer families, including but not limited to fluoropolymers, polyacrylates, polyacrylonitrile, polyamides, polyesters, polyetherimides, polyetherketones, polyetherketoneketones, polyethersulfones, polyolefins, polyethylenes, polypropylenes, polysulfones, polyvinyl chloride, and vinyl polymers.

In a further embodiment, in order to facilitate formation of at least one point of attachment between the third material and at least one particle of a second material, the third material and second material can be soluble in a common solvent. In one embodiment, a third material and second material can comprise polymers soluble in a common solvent. For example, if polymer P is soluble in solvent X and polymer Q is soluble in solvent X, then solvent X is a common solvent for polymer P and polymer Q. Common solvents, in some embodiments, include mixtures comprising a plurality of solvents. In one embodiment, for example, a common solvent is a mixture comprising dimethylacetamide and dimethyl formamide, in any appropriate proportion.

The third material does not form any points of attachment with the first material of the porous substrate. Dissimilarities in chemical and physical properties of the first and third materials can preclude formation of any points of attachment between the first and third materials. As shown in the Figures provided herein, defined spatial boundaries can exist between first and third materials in composite materials of the present invention.

In view of the lack of interaction between the third material and first material, points of attachment between the third material and at least one particle of a second material in the porous substrate can greatly assist in adhering the third material to the porous substrate. As described herein, in some embodiments, a third material can have points of attachment to a plurality of particles of a second material dispersed throughout the porous substrate. In embodiments where a third material comprises a porous membrane operable for filtering applications, particles of a second material can act as membrane binding particles which can anchor the membrane to the porous substrate. Anchoring a third material to a porous substrate by forming points of attachment between particles of a second material and the third material can provide composite materials, including composite filter materials, with an increased resistance to detachment of the third material from the porous substrate.

Moreover, forming points of attachment between a third material disposed on a surface of a porous substrate and particles of a second material in the substrate can permit the combination of dissimilar materials in the production of composite materials. In one embodiment, for example, a PVDF membrane is attached to a porous substrate comprising UHMWPE and a plurality of PVDF particles. As illustrated in the microscopy images provided herein, PVDF does not form attractive interactions with UHMWPE. A PVDF membrane, however, is attached to a porous substrate comprising UHMWPE by forming points of attachment with PVDF particles dispersed throughout the porous substrate. The ability to combine dissimilar materials to produce stable composite materials resistant to degradation, as described herein, allows for the use of porous substrates constructed of inexpensive polymers, such as HDPE, and membranes constructed of more expensive polymers, such as PVDF, in the design of filters for various filtering applications.

In one embodiment, for example, a porous composite material of the present invention comprises a porous substrate comprising an UHMWPE first material and at least one particle of a PVDF second material and a polyvinlylidene fluoride membrane disposed on at least one surface of the porous substrate and having at least one point of attachment to the at least one PVDF particle.

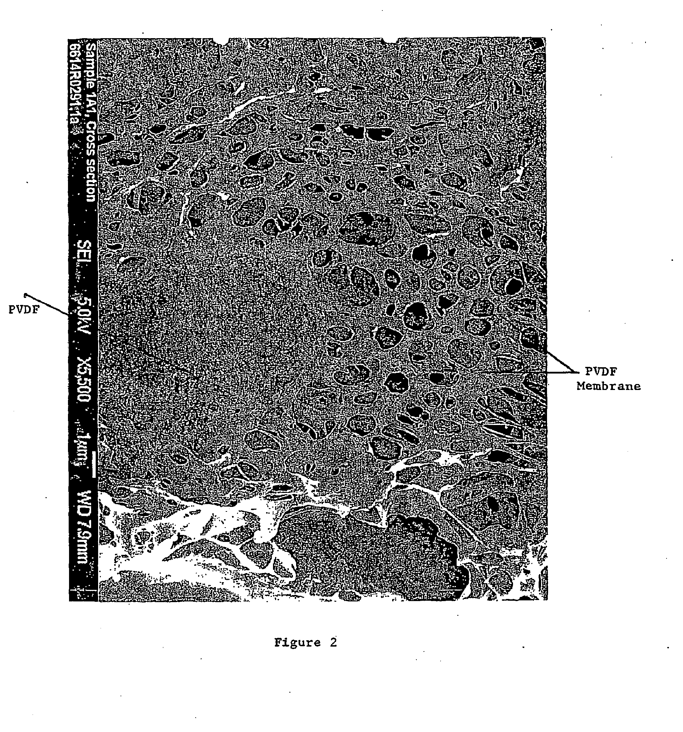

Figures 2-7 display scanning electron microscopy (SEM) images of porous composite materials produced in accordance with the present invention comprising a porous substrate comprising a first material of UHMWPE or HDPE and at least one particle of a PVDF second material and a PVDF membrane third material disposed on a surface of the porous substrate and having at least one point of attachment to the at least one PVDF particle.

Figure 2 displays a SEM image of a cross section of a composite material according to an embodiment of the present invention at a magnification of x5,500. As shown in Figure 2, a porous PVDF membrane forms a plurality of points of attachment with a PVDF particle (center) in a porous substrate comprising PVDF particles and UHMWPE.

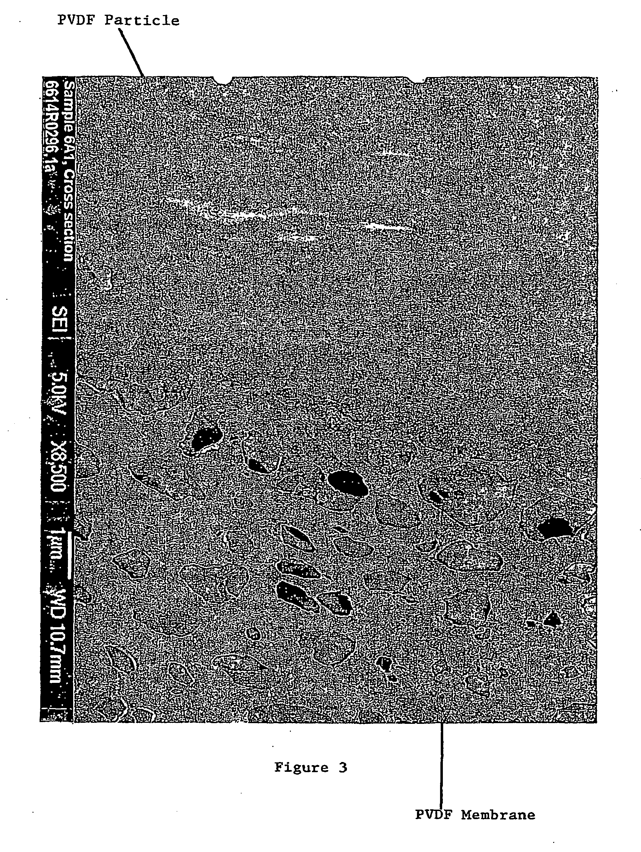

Similarly, Figure 3 displays a SEM image of a cross section of a composite material according to an embodiment of the present invention at a magnification of x8,500. In Figure 3, a porous PVDF membrane (right) forms a plurality of points of attachment with a PVDF particle (left) in a porous substrate comprising PVDF particles and UHMWPE.

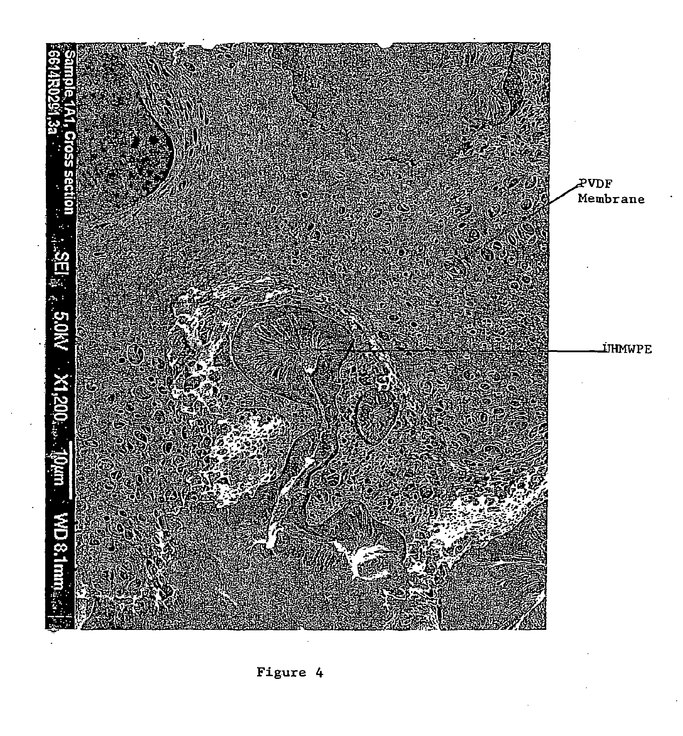

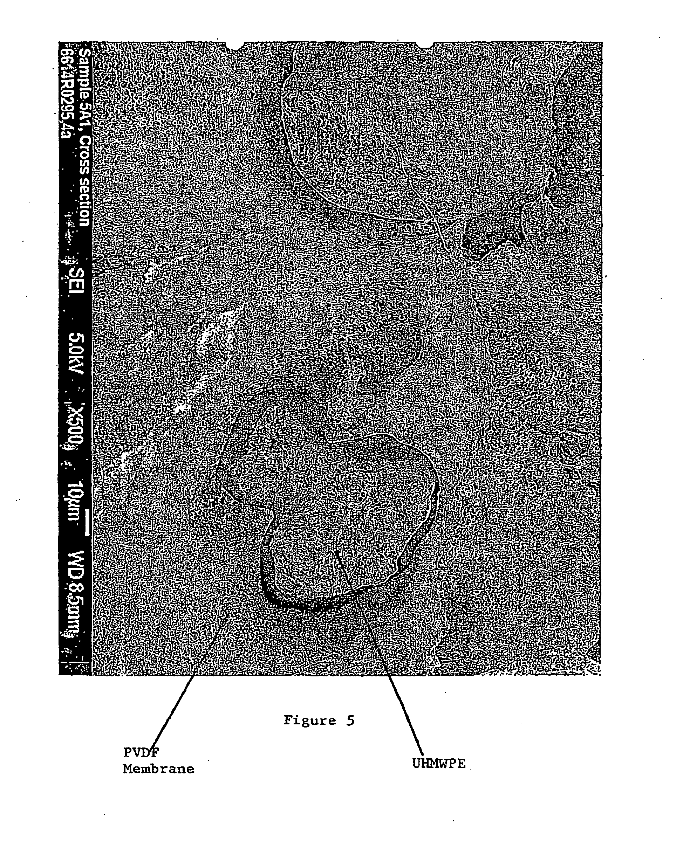

Figure 4 displays a SEM image of a cross section of composite material according to an embodiment of the present invention at a magnification of x1,200. As shown in Figure 4, a porous PVDF membrane does not form points of attachment with the UHMWPE component of the porous substrate. Defined interfacial boundaries exist between the PVDF membrane and UHMWPE. Similarly, Figure 5 displays boundary formation between UHMWPE of the porous substrate and a PVDF membrane disposed on the substrate.

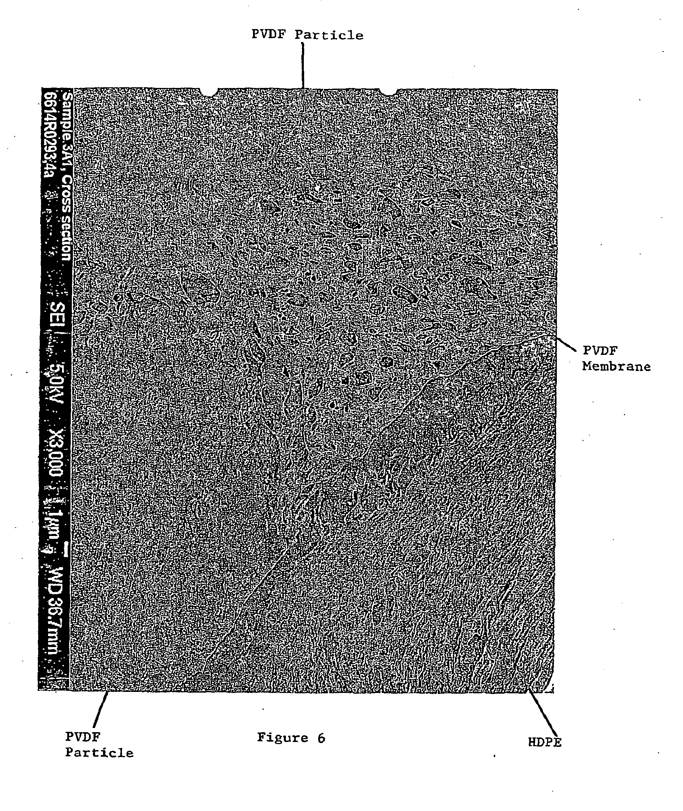

Figure 6 displays a SEM image at a magnification of x3,000 of a cross section of a composite material according to an embodiment of the present invention. Figure 6 further illustrates the lack of interaction between a PVDF membrane and HDPE of a porous substrate. A smooth interfacial boundary exists between the PVDF membrane (center) and the HDPE of the porous substrate (upper right). In contrast, the PVDF membrane forms a plurality of points of attachment with PVDF particles in the porous substrate (left and lower left).

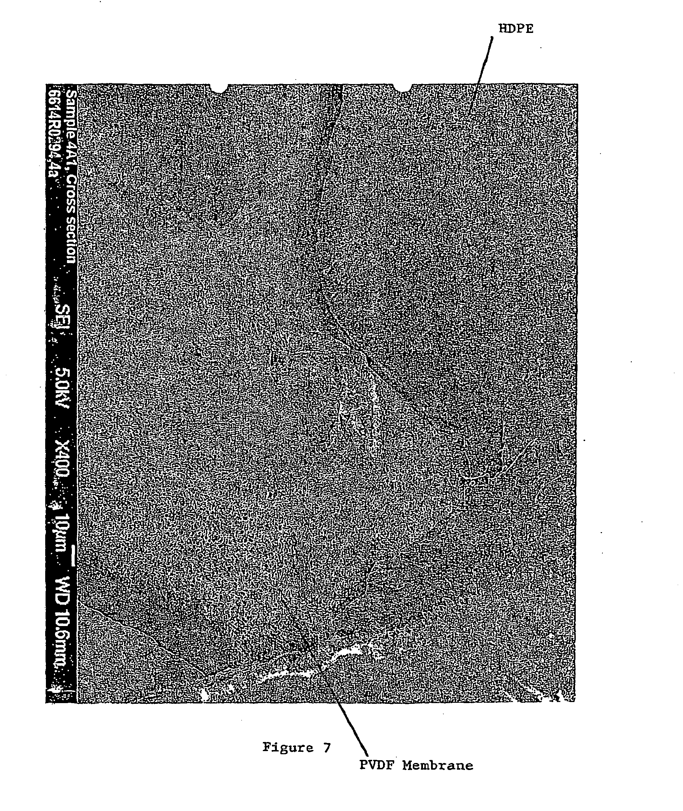

Figure 7 displays a SEM image at a magnification of x400 of a cross section of a composite material according to an embodiment of the present invention illustrating lack of interaction between a PVDF membrane and a HDPE of the porous substrate. Several clean boundaries between the PVDF membrane (center) and the HDPE of the porous substrate are evident. Moreover, the PVDF membrane forms a plurality of points of attachment to a PVDF particle (center) thereby providing the membrane with enhanced stability on the porous substrate.

### II. Porous Composite Materials Comprising Binding Fibers

As provided herein, according to another embodiment, a porous composite material comprises a porous composite material comprising a sintered porous substrate comprising a first polymeric material and at least one fiber of a second polymeric material and a third polymeric material disposed on at least one surface of the porous substrate and having at least one point of attachment to the fiber of the second material, wherein the third polymeric material does not form a point of attachment with the first polymeric material. In such embodiments, the at least one fiber of the second material operates to bind or adhere the third material to the porous substrate. A third material comprises a porous membrane. When bound or adhered to the porous substrate through interaction with one or more of the fibers of the second material, a third material comprising a porous membrane is operable to provide the porous substrate with a secondary pore structure.

The first material comprises a polymeric material as described hereinabove. Moreover, in some embodiments, a fibers of a second material comprise a polymeric material. Fibers of a second polymeric material, in some embodiments, comprise binder fibers. In some embodiments, binder fibers comprise monocomponent fibers, bicomponent fibers, or combinations thereof. Monocomponent fibers suitable for use in embodiments of the present invention, in some embodiments, comprise polyethylene, polypropylene, polystyrene, nylon-6, nylon-6,6, nylon 12, copolyamides, polyethylene terephthalate (PET), polybutylene terephthalate (TBP), co-PET, or combinations thereof.

Bicomponent fibers suitable for use in some embodiments of the present invention comprise polypropylene/polyethylene terephthalate (PET); polyethylene/PET; polypropylene/Nylon-6; Nylon-6/PET; copolyester/PET; copolyester/Nylon-6; copolyester/Nylon-6,6; poly-4-methyl-1-pentene/PET; poly-4-methyl-1-pentene/Nylon-6; poly-4-methyl-1-pentene/Nylon-6,6; PET/polyethylene naphthalate (PEN); Nylon-6,6/poly-1,4-cyclohexanedimethyl (PCT); polypropylene/polybutylene terephthalate (PBT); Nylon-6/co-polyamide; polylactic acid/polystyrene; polyurethane/acetal; and soluble copolyester/polyethylene. Biocomponent fibers, in some embodiments, comprise those disclosed by United States Patent Nos. 4,795,668; 4,830,094; 5,284,704; 5,509,430; 5,607,766; 5,620,641; 5,633,032; and 5,948,529.

Bicomponent fibers, according to some embodiments of the present invention, have a core/sheath or side by side cross-sectional structure. In other embodiments, bicomponent fibers have an islands-in-the-sea, matrix fibril, citrus fibril, or segmented pie cross-sectional structure. Bicomponent fibers comprising core/sheath cross-sectional structure and suitable for use in embodiments of the present invention are provided in Table I.

**Table I - Bicomponent Fibers**

| Sheath | Core |
|---|---|
| polyethylene (PE) | polypropylene (PP) |
| ethylene-vinyl acetate copolymer (EVA) | polypropylene (PP) |
| polyethylene (PE) | polyethylene terephthalate (PET) |
| polyethylene (PE) | polybutylene terephthalate (PBT) |
| Polypropylene (PP) | polyethylene terephthalate (PET) |
| Polypropylene (PP) | polybutylene terephthalate (PBT) |
| polyethylene (PE) | Nylon-6 |
| polyethylene (PE) | Nylon-6,6 |
| polypropylene (PP) | Nylon-6 |
| polypropylene (PP) | Nylon-6,6 |
| Nylon-6 | Nylon-6,6 |
| Nylon-12 | Nylon-6 |
| copolyester (CoPET) | polyethylene terephthalate (PET) |
| copolyester (CoPET) | Nylon-6 |
| copolyester (CoPET) | Nylon-6,6 |
| glycol-modified PET (PETG) | polyethylene terephthalate (PET) |
| polypropylene (PP) | poly-1,4-cyclohexanedimethyl (PCT) |
| polyethylene terephthalate (PET) | poly-1,4-cyclohexanedimethyl (PCT) |
| polyethylene terephthalate (PET) | polyethylene naphthalate (PEN) |
| Nylon-6,6 | poly-1,4-cyclohexanedimethyl (PCT) |
| polylactic acid (PLA) | polystyrene (PS) |
| polyurethane (PU) | acetal |

In some embodiments, fibers of a second polymeric material comprise continuous fibers. In other embodiments, fibers of the second polymeric material comprise staple fibers. In one embodiment, for example, a fiber of a second polymeric material comprises a staple bicomponent fiber. Staple fibers, according to some embodiments, have a length ranging from about 0.5 inches to about 20 inches, from about 1 inch to about 19 inches, from about 3 inches to about 15 inches, or from about 5 inches to about 12 inches. In a some embodiments, staple fibers have a length ranging from about 7 inches to about 10 inches or from about 15 inches to about 20 inches. In another embodiment, staple fibers have a length less than about 0.5 inches or greater than about 20 inches.

In some embodiments, fibers of a second polymeric material, including continuous and staple fibers, have a diameter ranging from about 1 µm to about 1 mm. In other embodiments, a fiber of a second polymeric material has a diameter ranging from about 10 µm to about 800 µm, from about 50 µm to about 500 µm, from about 100 µm to about 400 µm or from about 150 µm to about 300 µm. In another embodiment, a fiber of a second polymeric material has a diameter less than about 1 µm or greater than about 1 mm.

In some embodiments, the first polymeric material of the porous substrate comprises a plurality of polymeric particles operable to be sintered with the at least one fiber of a second polymeric material to produce the porous substrate. In some embodiments, particles of a first polymeric material are in the form of flakes, ground particles, micropelletized particles, powder, or combinations thereof. Polymeric particles of a first polymeric material, in some embodiments, comprise fluoropolymers, polyamides, polyethylenes, polypropylenes, polyesters, polyacrylonitriles, polyether imides, polyether ketones, polysulfones, polyvinyl chlorides, or copolymers and combinations thereof. In one embodiment, polymeric particles of a first polymeric material comprise HDPE. In another embodiment, particles of a first polymeric material comprise UHMWPE.

The first polymeric material, in other embodiments, comprises a plurality of polymeric fibers. Polymeric fibers suitable for use as a first polymeric material, in some embodiments, comprise monocomponent and/or bicomponent fibers consistent with those provided hereinabove for the at least one fiber of a second polymeric material.

The first polymeric material and second polymeric material of the at least one fiber, in embodiments of the present invention, are selected to differ from one another. In one embodiment, for example, the first polymeric material, whether a plurality of particles or a plurality of fibers, comprises polyethylene while the second polymeric material of the at least one fiber comprises a polyamide. In another embodiment, for example, the first polymeric material, whether a plurality of particles or a plurality of fibers comprises polypropylene while the second polymeric material of the at least one fiber comprises PET and PCT as the fiber is a bicomponent fiber.

In some embodiments, a porous substrate comprising a first polymeric material and at least one fiber comprising a second polymeric material is produced by co-sintering the first polymeric material and at least one fiber of a second polymeric material. In one embodiment, a plurality of particles of a first polymeric material are co-sintered with at least one fiber of a second polymeric material. In another embodiment, a plurality of fibers of a first polymeric material are co-sintered with at least one fiber of a second polymeric material.

Sintering temperatures and times, in embodiments of the present invention, are dependent upon the identities of the polymeric materials selected. In some embodiments, a first polymeric material and at least one fiber of a second polymeric material are sintered at a temperature ranging from about 200°F to about 700°F. Moreover, a first polymeric material and at least one fiber of a second polymeric material, in some embodiments, are sintered for a time period ranging from about 30 seconds to about 30 minutes. In other embodiments, a first polymeric material and at least one fiber of a second polymeric material are sintered for a time period ranging from about 1 minute to about 15 minutes or from about 5 minutes to about 10 minutes. In some embodiments, the sintering process comprises heating, soaking, and/or cooking cycles.

Depending on the desired size and shape of the final product (e.g., a block, tube, cone, cylinder, sheet, or film), sintering can be accomplished using a mold or other techniques known to those skilled in the art. Porous substrates and composite materials of the present invention can be produced in any desired shape including blocks, tubes, stars, cones, cylinders, sheets, films, and cartridges, including radial filter cartridges such as those disclosed in United States Patent 7,125,490. Molds suitable for sintering a first polymeric material and at least one fiber of a second polymeric material are consistent with those described hereinabove.

Once the porous substrate has been formed, the mold is allowed to cool. If pressure has been applied to the mold, the cooling can occur while pressure is still being applied or after pressure has been removed. The sintered porous substrate is then removed from the mold and optionally processed. Examples of optional processing include, but are not limited to, sterilizing, cutting, milling, polishing, encapsulating, and/or coating.

In some embodiments, fibers of the second polymeric material are dispersed throughout a matrix formed by the first polymeric material during the sintering process. The matrix formed by the first polymeric material, according to embodiments of the present invention, can comprise a plurality of sintered particles or a plurality of sintered fibers. Due to physical and/or chemical dissimilarities, fibers of the second polymeric material, in some embodiments, do not form any points of attachment to the matrix formed by the first polymeric material. Although the fibers of the second polymeric material do not form any points of attachment to the matrix of the first polymeric material, the fibers of the second polymeric material remain locked into the matrix by the sintering process.

In some embodiments, a porous substrate comprising a first polymeric material and at least one fiber of a second polymeric material has an average pore size ranging from about 1 µm to about 200 µm, from about 2 µm to about 150 µm, from about 5 µm to about 100 µm, or from about 10 µm to about 50 µm. A porous substrate comprising a first polymeric material and at least one fiber of a second polymeric material, in another embodiment, has an average pore size less than about I µm. In one embodiment, a porous substrate has an average pore size ranging from about 0.1 µm to about 1 µm. In a further embodiment, a porous substrate comprising a first polymeric material and at least one fiber of a second polymeric material has an average pore size greater than about 200 µm. In one embodiment, a porous substrate can have an average pore size ranging from about 200 µm to about 500 µm. Average pore sizes of substrates can be determined using mercury porosimetry or scanning electron microscopy (SEM).

In addition to average pore size, a porous substrate comprising a first polymeric material and at least one fiber of a second polymeric material, according to some embodiments, has an average porosity of at least 20%, of at least 30%, at least 40%, or at least 50%. In another embodiment, a porous substrate comprising a first polymeric material and at least one fiber of a second polymeric material has an average porosity of at least 60% or at least 75%. In a further embodiment, a porous substrate has an average porosity of at least 85%.

Porous substrates comprising a first polymeric material and at least one fiber of a second polymeric material, in some embodiments of the present invention, have a thickness ranging from about 100 µm to about 10 cm. In other embodiments, porous substrates have a thickness ranging from about 250 µm to about 5 cm, from about 400 µm to about 1 cm, from about 600 µm to about I mm, or from about 700 µm to about 900 µm. In another embodiment, a porous substrate comprising a first polymeric material and at least one fiber of a second polymeric material has a thickness less than about 100 µm. In a further embodiment, a porous substrate can have a thickness greater than about 10 cm.

In addition to a porous substrate comprising a first polymeric material and at least one fiber of a second polymeric material, a composite material of the present invention comprises a third polymeric material disposed on at least one surface of the porous substrate, wherein the third polymeric material has at least one point of attachment to the at least one fiber of a second polymeric material in the porous substrate. In some embodiments, a third polymeric material is present in at least some of the pores of the porous substrate. In other embodiments, a third polymeric material is present in some or all the pores of the porous substrate. Moreover, in some embodiments, a third polymeric material comprises a porous membrane having an average pore size less than or equal to the average pore size of the porous substrate. In such embodiments, a third polymeric material comprising a porous membrane can provide the porous substrate with a secondary pore structure leading to enhanced filtration properties.

Polymeric materials suitable for use as a third material can comprise fluoropolymers including PVDF, polyamides, polyethersulfones, polystyrenes, polyethylenes, polypropylenes, polyesters, polyacrylonitriles, polyether imides, polyetherether ketones, polysulfones, polyethersulfones, polyvinyl chlorides, and copolymers and combinations thereof. A third polymeric material, according to embodiments of the present invention, is selected to differ from the first material.

In some embodiments, a third polymeric material comprises pores having an average size ranging from about 0.2 nm to about 10 µm. In other embodiments, a third polymeric material comprises pores having an average size ranging from about 0.01 µm to about 5 µm or from about 0.1 µm to about 2 µm. In a further embodiment, a third polymeric material comprises pores having an average size ranging from about 0.5 µm to about 1 µm. In some embodiments, the average pore size of the third polymeric material is at least an order of magnitude less than the average pore size of the porous substrate.

In some embodiments, a third polymeric material has a thickness ranging from about 10 µm to about 10 mm. In other embodiments, a third polymeric material has a thickness ranging from about 25 µm to about 1 mm, from about 50 to 500 µm, from about 75 to 400 µm or from about 100 µm to about 300 µm. In a further embodiment, a third polymeric material has a thickness less than about 10 µm. In some embodiments, a third polymeric material has a thickness less than the thickness of the porous substrate on which the third polymeric material is disposed.

As provided herein, a third polymeric material, according to some embodiments, can serve as a membrane operable for filtering applications such as, but not limited to, microfiltration, ultrafiltration, and nanofiltration. In such embodiments, a third polymeric material can provide a porous substrate the requisite pore size and/or structure sufficient for performing microfiltration, ultrafiltration, or nanofiltration processes.

In embodiments of the present invention, a third polymeric material is disposed on at least one surface of a porous substrate comprising a first polymeric material and at least one fiber of a second material and has at least one point of attachment to the at least one fiber. In some embodiments, a third polymeric material has a plurality of points of attachment to at least one fiber of a second polymeric material. In other embodiments, a third polymeric material is continuously attached to at least one fiber of a second polymeric material.

In some embodiments, a porous substrate comprises a plurality of fibers of a second polymeric material. In such embodiments, a third polymeric material has at least one point of attachment with at least one of the plurality of fibers of a second polymeric material. In other embodiments, the third polymeric material has a plurality of points of attachment with at least one of the plurality of fibers of a second polymeric material. In another embodiment, the third polymeric material has at least one point of attachment with more than one of the plurality of fibers of a second polymeric material. In a further embodiment, the third polymeric material has a plurality of points of attachment with more than one of the plurality of fibers of a second polymeric material. A third polymeric material, for example, has a plurality of points of attachment with each of two or more fibers of a second polymeric material.

In order to facilitate formation of at least one point of attachment, in some embodiments, a third polymeric material and fibers of a second polymeric material comprise the same material. In one embodiment, for example, the third polymeric material and second polymeric material comprise the same polymer or copolymer.

In another embodiment, to facilitate formation of at least one point of attachment, a third polymeric material and fibers of a second polymeric material comprise polymeric materials from the same family. A third polymeric material and second polymeric material, in some embodiments, comprise polymers from the same family as described hereinabove.

In a further embodiment, in order to facilitate formation of at least one point of attachment between the third polymeric material and at least one fiber of a second polymeric material, the third polymeric material and second polymeric material are soluble in a common solvent, as defined hereinabove. In one embodiment, a third polymeric material and second polymeric material comprise polymers soluble in the same or a common solvent.

A third polymeric material does not form any points of attachment with the first polymeric material of the porous substrate. Dissimilarities in chemical and physical properties of the first and third polymeric materials can preclude formation of any points of attachment between the first and third polymeric materials. Spatial boundaries can exist between first and third polymeric materials in composite materials of the present invention.

In view of the lack of interaction between the third polymeric material and first polymeric material, points of attachment between the third polymeric material and at least one fiber of a second polymeric material in the porous substrate can greatly assist in adhering the third polymeric material to the porous substrate. As described herein, in some embodiments, a third polymeric material can have points of attachment to a plurality of fibers of a second polymeric material dispersed throughout the porous substrate. In embodiments where a third polymeric material comprises a porous membrane operable for filtering applications, fibers of a second polymeric material can act as membrane binding fibers which can anchor the membrane to the porous substrate. Anchoring a third polymeric material to a porous substrate by forming points of attachment between fibers of a second polymeric material and the third polymeric material can provide composite materials, including composite filter materials, with an increased resistance to detachment of the third polymeric material from the porous substrate.

Moreover, forming points of attachment between a third material disposed on a surface of a porous substrate and fibers of a second polymeric material in the substrate can permit the combination of dissimilar materials in the production of composite materials.

### III. Porous Substrates Comprising Bicomponent Fibers

Reference is made to a porous composite material comprising a porous substrate comprising at least one bicomponent fiber, the bicomponent fiber comprising a first polymeric material and a second polymeric material. A third polymeric material is disposed on at least one surface of the porous substrate and has at least one point of attachment to the first or second polymeric material of the bicomponent fiber. The porous substrate can comprise a plurality of bicomponent fibers. Bicomponent fibers suitable for use are provided in Table I above. In other embodiments, suitable bicomponent fibers comprise polypropylene/polyethylene terephthalate (PET); polyethylene/PET; polypropylene/Nylon-6; Nylon-6/PET; copolyester/PET; copolyester/Nylon-6; copolyester/Nylon-6,6; poly-4-methyl-1-pentene/PET; poly-4-methyl-1-pentene/Nylon-6; poly-4-methyl-1-pentene/Nylon-6,6; PET/polyethylene naphthalate (PEN); Nylon-6,6/poly-1,4-cyclohexanedimethyl (PCT); polypropylene/polybutylene terephthalate (PBT); Nylon-6/co-polyamide; polylactic acid/polystyrene; polyurethane/acetal; and soluble copolyester/polyethylene.

As provided herein, bicomponent fibers have a core/sheath or side by side cross-sectional structure. Bicomponent fibers may have a matrix fibril, islands-in-the-sea, citrus fibril, or segmented pie cross-sectional structure. Bicomponent fibers may be continuous fibers or staple fibers.

Staple bicomponent fibers may have a length ranging from about 0.5 inches to about 20 inches, from about 1 inch to about 19 inches, from about 3 inches to about 15 or from about 5 inches to about 12 inches. Staple bicomponent fibers may have a length ranging from about 7 inches to about 10 inches or from about 15 inches to about 20 inches. Staple bicomponent fibers may have a length less than about 0.5 inches or greater than about 20 inches.

A bicomponent fiber comprising a first polymeric material and a second polymeric material, including continuous and staple fibers, may have a diameter ranging from about 1 µm to about 1 mm. A bicomponent fiber may have a diameter ranging from about 10 µm to about 800 µm, from about 50 µm to about 500 µm, from about 100 µm to about 400 µm or from about 150 µm to about 300 µm. A fiber of a second material may have a diameter less than about 1 µm or greater than about 1 mm.

A porous substrate may be produced by sintering a plurality of bicomponent fibers. As understood by one of skill in the art, sintering temperatures and times are dependent on the specific identities of the first and second polymeric materials constituting the bicomponent fibers. Moreover, depending on the desired size and shape of the final product (e.g., a block, tube, cone, cylinder, sheet, or film), sintering can be accomplished using pultrusion processes or other techniques known to those skilled in the art. Porous substrates and composite materials of the present invention can be produced in any desired shape including blocks, tubes, stars, cones, cylinders, sheets, films, and cartridges, including radial filter cartridges such as those disclosed in United States Patent Application Serial No. 7,125,490. The die of a pultrusion process, for example, can be selected to have any desired cross-sectional shape for producing a porous substrate comprising a plurality of sintered bicomponent fibers.

Once the porous substrate has been formed, the substrate is allowed to cool. The sintered porous substrate can be subsequently optionally processed. Examples of optional processing include, but are not limited to, sterilizing, cutting, milling, polishing, encapsulating, and/or coating.

A porous substrate comprising a plurality of bicomponent fibers may have an average pore size ranging from about 1 µm to about 200 µm, from about 2 µm to about 150 µm, from about 5 µm to about 100 µm, or from about 10 µm to about 50 µm. A porous substrate comprising a plurality of bicomponent fibers may have an average pore size less than about 1 µm. A porous substrate may have an average pore size ranging from about 0.1 µm to about 1 µm. A porous substrate comprising a plurality of bicomponent fibers may have an average pore size greater than about 200 µm. A porous substrate can have an average pore size ranging from about 200 µm to about 500 µm. Average pore sizes of substrates can be determined using mercury porosimetry or scanning electron microscopy (SEM).

In addition to average pore size, a porous substrate comprising a plurality of bicomponent fibers may have an average porosity of at least 20%. A porous substrate may have an average porosity of at least 30%, at least 40%, at least 50%, at least 60% or at least 75%. A porous substrate may have an average porosity of at least 85%.

Porous substrates comprising a plurality of bicomponent fibers may have a thickness ranging from about 100 µm to about 10 cm. Porous substrates may have a thickness ranging from about 250 µm to about 5 cm, from about 400 µm to about 1 cm, from about 600 µm to about 1 mm, or from about 700 µm to about 900 µm. A porous substrate comprising a plurality of bicomponent fibers may have a thickness less than about 100 µm. A porous substrate may have a thickness greater than about 10 cm.

In addition to a porous substrate comprising at least one bicomponent fiber, the bicomponent fiber comprising a first polymeric material and a second polymeric material, a porous composite material comprises a third polymeric material disposed on at least one surface of the porous substrate, wherein the third polymeric material has at least one point of attachment to the first or second polymeric material of the bicomponent fiber. A third polymeric material may be present in at least some of the pores of the porous substrate. A third polymeric material may be present in some or all the pores of the porous substrate. Moreover, a third polymeric material may comprise a porous membrane having an average pore size less than or equal to the average pore size of the porous substrate. A third polymeric material comprising a porous membrane can provide the porous substrate with a secondary pore structure leading to enhanced filtration properties.

Polymeric materials suitable for use as a third material can comprise fluoropolymers including PVDF, polyamides, polyethersulfones, polystyrenes, polyethylenes, polypropylenes, polyesters, polyacrylonitriles, polyether imides, polyetherether ketones, polysulfones, polyethersulfones, polyvinyl chlorides, and copolymers and combinations thereof.

A third polymeric material may comprise pores having an average size ranging from about 0.2 nm to about 10 µm. A third polymeric material may comprise pores having an average size ranging from about 0.01 µm to about 5 µm or from about 0.1 µm to about 2 µm. A third polymeric material can comprise pores having an average size ranging from about 0.5 µm to about 1 µm. The average pore size of the third polymeric material may be at least an order of magnitude less than the average pore size of the porous substrate.

A third polymeric material may have a thickness ranging from about 10 µm to about 10 mm. A third polymeric material may have a thickness ranging from about 25 µm to about 1 mm, from about 50 to 500 µm, from about 75 to 400 µm, or from about 100 µm to about 300 µm. A third polymeric material can comprise a thickness less than about 10 µm. A third polymeric material can comprise a thickness less than the thickness of the porous substrate on which the third material is disposed.

As provided herein, a third polymeric material can serve as a membrane operable for filtering applications such as, but not limited to, microfiltration, ultrafiltration, and nanofiltration. A third polymeric material can provide a porous substrate comprising bicomponent fibers the requisite pore size and/or structure sufficient for performing microfiltration, ultrafiltration, or nanofiltration processes.

A third polymeric material may be disposed on at least one surface of a porous substrate comprising at least one bicomponent fiber, the bicomponent fiber comprising a first polymeric material and a second polymeric material. The third polymeric material has at least one point of attachment to the first polymeric or second polymeric material of the bicomponent fiber. The third polymeric material may have a plurality of points of attachment to the first polymeric material or second polymeric material of the bicomponent fiber. A third material can be continuously attached to the first polymeric material or second polymeric material of the bicomponent fiber.

A porous substrate may comprise a plurality of bicomponent fibers. A third polymeric material can have at least one point of attachment with the first polymeric material or second polymeric material of at least one of the plurality of bicomponent fibers. The third polymeric material can have a plurality of points of attachment with the first polymeric material or second polymeric material of at least one of the plurality of bicomponent fibers. The third polymeric material can have at least one point of attachment with the first or second polymeric materials of more than one of the plurality of bicomponent fibers. The third polymeric material have a plurality of points of attachment with the first or second polymeric materials of more than one of the plurality of bicomponent fibers. A third polymeric material, for example, can have a plurality of points of attachment with the first or second polymeric materials of two or more bicomponent fibers.

In order to facilitate formation of at least one point of attachment, a third polymeric material and the first or second polymeric material of a bicomponent fiber comprise the same material. In one embodiment, for example, the third polymeric material and first polymeric of the bicomponent fiber may comprise the same polymer or copolymer. The third polymeric material and second polymeric material of the bicomponent fiber may comprise the same polymer or copolymer.

To facilitate formation of at least one point of attachment, a third polymeric material and the first polymeric material or second polymeric material of a bicomponent fiber may comprise polymeric materials from the same family. A third polymeric material and the first or second polymeric material of a bicomponent fiber may comprise polymers from the same family as described hereinabove.

In order to facilitate formation of at least one point of attachment between the third polymeric material and the first polymeric material or second polymeric material of a bicomponent fiber, the third polymeric material and first polymeric material or second polymeric material may be soluble in a common solvent, as defined hereinabove.

Wherein the third polymeric material forms at least one point of attachment with the first polymeric material of a bicomponent fiber, the third material may not form any points of attachment with the second polymeric material of the bicomponent fiber. Dissimilarities in chemical and physical properties of the second polymeric material of the bicomponent fiber and third polymeric material can preclude formation of any points of attachment between the second polymeric material and third polymeric material. As a result, spatial boundaries may exist between the second polymeric material of the bicomponent fiber and third polymeric material.

Wherein the third polymeric material forms at least one point of attachment with the second polymeric material of a bicomponent fiber, the third material may not form any points of attachment with the first polymeric material of the bicomponent fiber. Dissimilarities in chemical and physical properties of the first polymeric material of the bicomponent fiber and third polymeric material can preclude formation of any points of attachment between the first polymeric material and third polymeric material. As a result, spatial boundaries may exist between the first polymeric material of the bicomponent fiber and third polymeric material.

### III. Methods of Producing Porous Composite Materials

In addition to porous composite materials, the present invention provides methods of producing porous composite materials. In one embodiment, a method for producing a porous composite material comprises providing a porous substrate comprising a first polymeric material and at least one particle of a second polymeric material, providing a solution comprising a third material Polymeric material dissolved in a solvent, applying the solution to the porous substrate, and forming at least one point of attachment between the third polymeric material and the at least one particle.

In some embodiments, particles of the second polymeric material are soluble in the solvent used to dissolve the third polymeric material. In such embodiments, when the solvent is applied to the porous substrate as part of the solution, the solvent can at least partially dissolve the particles of the second polymeric material. Dissolving or at least partially dissolving particles of the second polymeric material can facilitate formation of points of attachment with the third polymeric material. In some embodiments, the second polymeric material and the third polymeric material comprise the same polymer or copolymer. In other embodiments, the second polymeric material and the third polymeric material comprise polymers from the same family.

In another embodiment, a method of making a porous composite material comprises providing a porous substrate comprising a first polymeric material and at least one fiber of a second polymeric material, providing a solution comprising a third polymeric material dissolved in a solvent, applying the solution to the porous substrate, and forming at least one point of attachment between the third polymeric material and the at least one fiber of a second polymeric material.

In some embodiments, the second polymeric material of the at least one fiber is soluble in the solvent used to dissolve the third polymeric material. In such embodiments, when the solvent is applied to the porous substrate as part of the solution, the solvent can at least partially dissolve the second polymeric material of the at least one fiber. Dissolving or at least partially dissolving the second polymeric material can facilitate formation of points of attachment between the second polymeric material of the at least one fiber and the third polymeric material. In some embodiments, the second polymeric material and third polymeric material comprise the same polymer or copolymer. In other embodiments, the second polymeric material and third polymeric material comprise polymers from the same family.

Reference is made to a method of making a porous composite material comprises providing a porous substrate comprising at least one bicomponent fiber comprising a first polymeric material and a second polymeric material, providing a solution comprising a third polymeric material dissolved in a solvent, applying the solution to the porous substrate, and forming at least one point of attachment between the third polymeric material and the first or second polymeric material of the bicomponent fiber. In some embodiments, the porous substrate comprises a plurality of bicomponent fibers.

The first polymeric material or second polymeric material of the at least one bicomponent fiber may be soluble in the solvent used to dissolve the third polymeric material. When the solvent is applied to the porous substrate as part of the solution, the solvent may at least partially dissolve the first polymeric material or second polymeric of the at least one bicomponent fiber. Dissolving or at least partially dissolving the first polymeric material or second polymeric material of the at least one bicomponent fiber can facilitate formation of points of attachment between the first polymeric material or second polymeric material and the third polymeric material. In some embodiments, the first polymeric material or second polymeric material comprise the same polymer or copolymer as the third polymeric material. In other embodiments, the first polymeric material or second polymeric material comprise polymers from the same family as the third polymeric material.

In some embodiments, a solution comprising a third polymeric material dissolved in a solvent comprises about 5 percent by weight a third polymeric material. In other embodiments, a solution comprises up to about 20 weight percent a third polymeric material. In another embodiment, a solution comprises from about 5 weight percent to about 20 weight percent a third polymeric material. In a further embodiment, a solution comprises greater than 20 weight percent a third polymeric material. In one embodiment, for example, a solution comprises from about 5 weight percent to about 20 weight percent PVDF.

Solvents suitable for use in solutions comprising a third polymeric material are dependent on the identity of the third polymeric material. In some embodiments, solvents can comprise dimethylacetamide (DMAc), dimethyl sulfoxide (DMSO), dimethyl formamide (DMF), *N*-methyl pyrrolidone (NMP), triethylphosphate (TEP), isopropyl alcohol (IPA), acetone, tetrahydrofuran (THF), triethylene glycol, mineral oil, and mixtures thereof.

Solutions of the present invention comprising a third polymeric material dissolved in a solvent for application to a porous substrate are prepared by combining the third polymeric material with the appropriate solvent. In some embodiments, mechanical agitation, such as stirring and/or sonication, is used to ensure complete solubilization of the third polymeric material in the solvent. Moreover, in some embodiments, solutions comprising a third polymeric material dissolved in a solvent are prepared in accordance with the solutions set forth in United States Patent Application Serial No. 10/982,392 entitled Composite Porous Materials and Methods of Making and Using the Same.

Solution comprising a third polymeric material dissolved in a solvent can be applied to porous substrates of the present invention by a variety of methods. In one embodiment, for example, a solution comprising a third polymeric material dissolved in a solvent is applied to a porous substrate with the assistance of a spreading/leveling device or a solution-pushing device while the solution contacts the porous substrate.

In one embodiment of the present invention, a solution-pushing device is shaped for applying an even coating of material solution to the interior of a tubular element. For instance, the solution-pushing device may be elongated, e.g., rod-like or cylindrical. In particular, the shape of a solution-pushing device, in some embodiments, is selected to comprise contacting surfaces conforming to the tubular element. A solution-pushing device for applying a material solution to the interior surface of a tubular element, in some embodiments, includes cylindrical contact areas conforming to the cylindrical interior of the tubular element. The dimensions of the solution-pushing device may be selected to control the amount and/or thickness and/or uniformity of the material solution being deposited. Deposition of the solution comprising a third polymeric material, in some embodiments, is also facilitated by using a suitable device during and following contact of the material solution to the element to which the solution is to be applied.

In another embodiment, a solution comprising a third polymeric material is applied to a porous substrate, such as a tubular porous substrate, through a hollow applicator operable to dispense solution as it moves through the bore of a porous tube. The applicator, in some embodiments, may have an interior cavity and one or more passages from the interior cavity to the exterior of the applicator. A solution comprising a third polymer as described herein, may be supplied to the interior cavity within the applicator and allowed to pass from the interior cavity through the passages to the exterior of the hollow applicator. As a result, upon relative axial movement of the tubular element and the applicator positioned within the tubular element in conjunction with supplying solution to the applicator, solution is dispensed and applied along the interior surface of the tubular element. As such, metered dispensing provides controlled application conditions for and deposition of the solution, and resultant uniformity and/or smoothness of the material onto the tubular element is facilitated. Additionally, use of the applicator allows for less solution to be used, thereby providing a more economical method. The speed and/or pressure at which solution is supplied to the applicator may be selected to achieve the desired thickness and/or uniformity and/or smoothness of the solution applied to the interior surface of the tubular element.

Moreover, solutions comprising a third polymeric material dissolved in a solvent can be applied to a porous substrate, in some embodiments, in accordance with those provided in United States Patent Application Serial No. 10/982,392.

Methods for producing porous composite materials, according to some embodiments, further comprise contacting the porous substrate and the solution applied thereon with a fluid miscible with the solvent used to dissolve the third polymeric material, wherein the fluid is not a solvent for the third polymeric material. Contacting the porous substrate and the solution applied thereon with the miscible fluid can provide a porous structure to the third material. In some embodiments contacting can comprise immersing the porous substrate and solution applied thereon in the miscible fluid. In one embodiment, the porous substrate and solution applied thereon can be immersed in successive baths of a miscible fluid or fluids.

A porous third polymeric material can be formed upon precipitation of the polymer material from the solution. Properties of the third polymeric material, in some embodiments, can be varied by controlling parameters such as solvent type, amounts of inorganic salt additives, coating thickness, immersion bath composition, and immersion bath temperature. In some embodiments, the miscible fluid can comprise water. In other embodiments, the miscible fluid can comprise water-alcohol solutions.

Inorganic salts are known in the art and can be varied depending on the specific polymer used and the desired properties of the resulting porous second material. Examples of inorganic salts include, but are not limited to, lithium chloride, zinc chloride, sodium chloride, potassium chloride, lithium bromide, zinc bromide, sodium bromide, potassium bromide, and any mixture thereof. In one embodiment, the inorganic salt is lithium chloride, zinc chloride, or any mixture thereof. In another embodiment, the inorganic salt is lithium chloride.

Optionally, after contact with any/all miscible fluids, the porous composite material can be washed. Optionally, after contact with any/all miscible fluids, the porous composite material can be dried. Optionally, after contact with any/all miscible fluids, the porous composite material can be washed and subsequently dried. Washing may be administered with any suitable liquid known in the art, e.g., water. Moreover, washing may be administered by any suitable method known in the art, e.g., immersing the composite porous material in a wash-liquid bath. Drying may be administered by any suitable method known in the art, e.g., drying the composite porous material in air at about 25°C. or using a conventional belt or stationary dryer at a temperature of about 25°C. or at an elevated temperature.

In one embodiment, for example, a composite porous material of the present invention is prepared by depositing a solution comprising a third polymeric (e.g., PVDF) at a concentration of at least about 5 wt. % and an inorganic salt (e.g., LiCl) in a solvent (e.g., DMAc or a 50/50 mixture by volume of DMAc and NMP) onto a sintered porous substrate comprising particles of PVDF dispersed throughout a HDPE matrix. In another embodiment, a composite porous material is prepared by depositing a solution comprising a third polymeric (e.g., PVDF) at a concentration of up to about 20 wt. % and an inorganic salt (e.g., LiCl) in a solvent (e.g., DMAc or a 50/50 mixture by volume of DMAc and NMP) onto a sintered porous substrate comprising particles of PVDF dispersed throughout a HDPE matrix. In a further embodiment, a composite porous material is prepared by depositing a solution comprising a third polymeric material (e.g., PVDF) at a concentration of from about 5 wt. % to about 20 wt. % and an inorganic salt (e.g., LiCl) in a solvent (e.g., DMAc or a 50/50 mixture by volume of DMAc and NMP) onto a sintered porous substrate comprising particles of PVDF dispersed throughout a HDPE matrix. In each of the foregoing embodiments of this paragraph, the resulting coated substrate is subsequently contacted with a miscible fluid comprising water.

### IV. Methods of Filtering a Fluid

In addition to providing porous composite materials and methods of making the same, the present invention provides methods of using porous composite materials, including methods of filtering a fluid with a porous composite material. In one embodiment, a method for filtering a fluid comprises providing a filter, the filter comprising a porous substrate comprising a first material and at least one particle of a second material and a porous third material disposed on at least one surface of the substrate; and passing a fluid through the filter. In some embodiments of methods of filtering, the third material disposed on at least one surface of the porous substrate has at least one point of attachment to the at least one particle of the second material.

In another embodiment, a method of filtering a fluid comprises providing a filter, the filter comprising a porous substrate comprising a first polymeric material and at least one fiber of a second polymeric material and a third polymeric material disposed on at least one surface of the substrate and having at least one point of attachment to the at least one fiber; and passing a fluid through the filter.

Reference is made to a method of filtering a fluid comprises providing a filter, the filter comprising a porous substrate comprising at least one bicomponent fiber, the bicomponent fiber comprising a first polymeric material and a second polymeric material; and a third polymeric material disposed on at least one surface of the porous substrate and having at least one point of attachment to the first or second polymeric material of the bicomponent fiber; and passing a fluid through the filter.

Fluids in embodiments of the present invention comprise liquids and gases. In one embodiment, for example, a fluid comprises water. In another embodiment, a fluid comprises air.

Methods of filtering using porous composite materials of the present invention, according to some embodiments, can comprise microfiltration processes, ultrafiltration processes, and nanofiltration processes. Non-limiting examples of applications for which microfiltration is suitable include dust collection, cold sterilization of beverages and pharmaceuticals, cell harvesting, clarification of fruit juices, beer, and wine, waste water treatment, and continuous fermentation. Non-limiting examples of applications for which ultrafiltration is suitable include pretreatment of sea water in desalinization plants, recovery of whey protein from milk, oil water separation, and wastewater treatment for reuse as process water. Examples of applications for which nanofiltration is suitable include reforming dyes and filtering lactose from milk.

Embodiments of the present invention a further illustrated in the following non-limiting examples.

### EXAMPLE 1

### Producing a Solution Comprising a Third Polymeric Material

In producing a solution comprising a third polymeric material for application to a porous substrate, in accordance with one embodiment of the present invention, two separate solutions, Intermediate Solution A and Intermediate Solution B, were prepared. Subsequent to preparation, Intermediate Solution A was combined with Intermediate Solution B to produce the Third Polymeric Material Solution for application to a porous substrate.

### Preparation of Intermediate Solution A

To a one gallon (3.8 liter) HDPE milling jar/carboy, 100 grams of lithium chloride (LiCl) and 2,500 grams DMAc were added. A lid was secured onto the carboy with duct tape and the carboy was placed on a roller mill operating at 20 rpm for two hours, after which the LiCl appeared to be fully dissolved. The carboy was opened and 520 grams of PVDF (KYNAR 2800 from Arkema, Inc.) were added. The PVDF was slowly combined with the solution, stirring with a glass rod to avoid air bubbles. The lid was then secured onto the carboy with duct tape and the carboy was replaced on the 20 rpm roller mill until a solution appearing homogenous formed (after about 4-10 hours). Intermediate Solution A was examined for color (e.g., a yellowish appearance), air bubbles, and/or gel lumps of non-dissolved PVDF. As none of these conditions was evident, the lid was secured onto the carboy with tape, and the carboy was placed in a temperature-controlled room (maintained at about 25°C) for further use.

### Preparation of Intermediate Solution B

To another one gallon HDPE milling jar/carboy containing 900 grams of NMP, 100 grams of PVP (grade K-90 obtained from ISP Technology Inc. (Wayne, N.J.)), were added. The combination was stirred gently with a glass rod. The lid was secured onto the carboy with duct tape and the carboy was placed on a roller mill operating at 20 rpm until Intermediate Solution B, appearing homogenous, formed (after about 4-10 hours). Intermediate Solution B was examined for color (e.g., a yellowish appearance), air bubbles, and/or gel lumps of non-dissolved PVP. As none of these conditions was evident, the lid was secured onto the carboy with tape and the carboy was placed in a temperature-controlled room (maintained at about 25°C) for further use.

### Combination of Intermediate Solution A with Intermediate Solution B

At about 25°C, Intermediate Solution A was added to the carboy of Intermediate Solution B to form the Third Polymeric Material Solution. The lid of the Intermediate Solution B carboy was secured onto the carboy with tape, and the carboy was placed on the 20 rpm roller mill until the resulting Third Polymeric Material Solution appeared homogenous (after about 6 hours). The carboy was removed from the mill and was examined for color and solid polymer particles. As neither of these conditions was evident, the lid was secured onto the carboy with tape and the carboy was placed in a temperature-controlled room (maintained at about 25°C) for further use.

### EXAMPLE 2

### Application of a Third Polymeric Material Solution to a Porous Substrate

An 8 inch by 8 inch (20.3 cm x 20.3 cm) planar sheet of a sintered porous substrate comprising an HDPE matrix with particles of PVDF dispersed therein was provided. The sintered porous substrate comprised about 5 weight percent PVDF particles with the balance HDPE. The sintered porous substrate had a porosity of about 40% and an average pore size of about 30 µm. The porous substrate was placed on a clean, flat, smooth, level glass top of a table. Each corner of the sheet was fastened to the table's surface with electrical tape. Three layers of 0.75 inch (1.9 cm) wide electrical tape were placed on the table's surface beyond each edge of the sheet. The thickness of the three layers of tape, about 0.015 inches (0.038 cm), corresponded to the desired wet thickness of the third polymeric material.

An aliquot of the Third Polymeric Material Solution, prepared in accordance with Example 1, was poured from the carboy into a 100 mL glass beaker. From the beaker, about 20 mL of the Third Polymeric Material Solution was poured onto the sintered porous substrate sheet along a line approximately 2 inches (5.1 cm) away from the edge of the sheet to form a bead. A 2-inch (5.1 cm) diameter, 8-inch (20.3 cm) long glass rod was used as a squeegee to spread the bead of solution evenly and to remove excess solution from the sheet. This was done by drawing the rod, with its longitudinal-axis parallel to the bead, from top to bottom slowly (over about 30 seconds) and steadily over the sintered porous substrate sheet with downward pressure from beyond the outside edge of the top strip of tape to beyond the outside edge of the bottom strip of tape. A timer was started immediately upon completion of removing the excess Third Polymeric Material Solution.

After 3 minutes had elapsed from the completion of the removal of excess Third Polymeric Material Solution, the electrical tape was cut at all four corners, releasing the coated sintered porous substrate sheet from the table. The sheet was held suspended for three minutes in a flat position and with the coated side up, and then was carefully transported to a 12 inch long by 12 inch wide by 6 inch deep (30.5 cm by 30.5 cm by 15.2 cm) glass tray filled with about 4 inches (10 cm) of water. The sheet, coated side up, was then immersed steadily into the water bath over about a 10 second period and subsequently suspended for about 3 minutes. Thereafter, the sheet was released and allowed to lie flat on the bottom of the tray for about 24 hours.

Following removal from the tray, the sintered porous substrate sheet was placed into another tray containing a 5 weight percent solution of glycerin in water for 30 minutes. Subsequent to removal from the glycerin/water solution, the sheet was dried in air for 24 hours. The resulting porous composite material had a sintered porous polymeric substrate with an average pore size of about 30 µm and a third polymeric material porous membrane (PVDF) with an average pore size of about 0.1 µm.

As illustrated in Figures 6 and 7, the PVDF membrane deposited by the Third Polymeric Material Solution formed a plurality of points of attachment with the PVDF particles dispersed in the sintered HDPE matrix. Moreover, interfacial boundaries existed between the PVDF membrane and the sintered HDPE matrix. As a result, the PVDF membrane attached to the sintered porous substrate through a plurality of points of attachment with the PVDF particles dispersed in the HDPE matrix.

### EXAMPLE 3 (for reference)

### Porous Composite Material Comprising Bicomponent Fibers

A porous substrate comprising a plurality of sintered staple bicomponent fibers is provided. The staple bicomponent fibers comprise a polyester/polyolefin construction. In the present embodiment, a staple bicomponent fiber comprising a polyester/polyolefin construction is KoSA T-256 available from KoSA, Incorporated. A sliver comprising polyester/polyolefin staple bicomponent fibers is produced by a carding process, and the sliver is drawn through an oven or other heating device in which the temperature of the oven is set at or near the melt temperature of at least one of the two fiber components. The sliver of staple bicomponent fibers is subsequently drawn through a heated die, which causes the staple bicomponent fibers to make contact with one another and adhere to one another. The die can have any desired shape, such as a sheet or tube. The oven and die, in the present example, are heated to a temperature ranging from about 140°C to about 170°C. The staple bicomponent fibers are then cooled, producing the sintered porous substrate. The porous substrate comprising a plurality of polyester/polyolefin staple bicomponent fibers has a porosity ranging from about 50% to about 90% and an average pore size ranging from about 0.5 µm to about 20 µm. In the present example, the sintered porous substrate is in the form of a planar sheet.

The planar sheet of the sintered porous substrate comprising a plurality of polyester/polyolefin staple bicomponent fibers is placed on a clean, flat, smooth, level glass top of a table. Each corner of the sheet was fastened to the table's surface with electrical tape. Three layers of 0.75 inch (1.9 cm) wide electrical tape are placed on the table's surface beyond each edge of the sheet. The thickness of the three layers of tape, about 0.015 inches (0.038 cm), corresponds to the desired wet thickness of the third polymeric material.

An aliquot of the Third Polymeric Material Solution, prepared in accordance with Example 1, is poured from the carboy into a 100 mL glass beaker. From the beaker, about 20 mL of the Third Polymeric Material Solution is poured onto the sintered porous substrate sheet along a line approximately 2 inches (5.1 cm) away from the edge of the sheet to form a bead. A 2-inch (5.1 cm) diameter, 8-inch (20.3 cm) long glass rod is used as a squeegee to spread the bead of solution evenly and to remove excess solution from the sheet. This is accomplished by drawing the rod, with its longitudinal-axis parallel to the bead, from top to bottom slowly (over about 30 seconds) and steadily over the sintered porous substrate sheet with downward pressure from beyond the outside edge of the top strip of tape to beyond the outside edge of the bottom strip of tape. A timer is started immediately upon completion of removing the excess Third Polymeric Material Solution.

After 3 minutes has elapsed from the completion of the removal of excess Third Polymeric Material Solution, the electrical tape is cut at all four corners, releasing the coated sintered porous substrate sheet from the table. The sheet is suspended for three minutes in a flat position and with the coated side up, and then is carefully transported to a 12 inch long by 12 inch wide by 6 inch deep (30.5 cm by 30.5 cm by 15.2 cm) glass tray filled with about 4 inches (10 cm) of water. The sheet, coated side up, is then immersed steadily into the water bath over about a 10 second period and subsequently suspended for about 3 minutes. Thereafter, the sheet was released and allowed to lie flat on the bottom of the tray for about 24 hours.

Following removal from the tray, the sintered porous substrate sheet is placed into another tray containing a 5 weight percent solution of glycerin in water for 30 minutes. Subsequent to removal from the glycerin/water solution, the sheet is dried in air for 24 hours. The resulting porous composite material comprises a sintered porous polymeric substrate with an average pore size of about 20 µm and a third polymeric material porous membrane (PVDF) with an average pore size of about 0.1 µm.

In the present example, the polyester component of the staple bicomponent fibers and the PVDF third polymeric material are soluble in the same solvent. As a result, the PVDF third polymeric porous membrane forms a plurality of points attachment with the polyester component of the staple bicomponent fibers. The PVDF membrane is, therefore, attached to the sintered porous substrate through a plurality of points of attachment with the polyester component of the staple bicomponent fibers.

All patents, publications and abstracts cited above are incorporated herein by reference in their entirety. It should be understood that the foregoing relates only to preferred embodiments of the present invention and that numerous modifications or alterations may be made therein without departing from the spirit and the scope of the present invention as defined in the following claims.

## Claims

1. A porous composite material comprising:
a sintered porous substrate comprising a first polymeric material and at least one particle or fiber of a second polymeric material; and
a porous membrane comprising a third polymeric material disposed on at least one surface of the composite sintered porous substrate and having at least one point of attachment to the at least one particle or fiber of the second polymeric material, wherein the third polymeric material does not form a point of attachment with the first polymeric material.

2. The porous composite material of claim 1, wherein the first polymeric material and the second polymeric material are independently selected from the group consisting of fluoropolymers, polyamides, polyethylenes, polypropylenes, polyesters, polyacrylonitriles, polyether imides, polyetherether ketones, polysulfones, polyethersulfones, polyvinyl chlorides, or copolymers or combinations thereof.

3. The porous composite material of claim 1 or 2, wherein the first polymeric material comprises a plurality of polyethylene particles.

4. The porous composite material of any one of claims 1 to 3, wherein the second polymeric material comprises polyvinylidene fluoride.

5. The porous composite material of any one of claims 1 to 4, wherein the third polymeric material comprises fluoropolymers, polyamides, polyethylenes, polypropylenes, polyesters, polyacrylonitriles, polyether imides, polyetherether ketones, polysulfones, polyethersulfones, polyvinyl chlorides, or copolymers or combinations thereof.

6. The porous composite material of any one of claims 1 to 5, wherein the second polymeric material and the third polymeric material comprise the same polymer.

7. The porous composite material of any one of claims 1 to 6, wherein the second polymeric material and the third polymeric material comprise polymers which comprise or are formed from related monomers.

8. The porous composite material of any one of claims 1 to 7, wherein the second polymeric material and the third polymeric material are soluble in a common solvent

9. The porous composite material of any one of claims 1 to 8, wherein the at least one fiber comprises a continuous fiber or a staple fiber.

10. The porous composite material of any one of claims 1 to 9, wherein the at least one fiber comprises a monocomponent fiber or a bicomponent fiber.

11. The porous composite material of any one of claims 1 to 10, wherein the first polymeric material comprises a plurality of particles, fibers, or combinations thereof.

12. The porous composite material of claim 1, wherein a plurality of particles or a plurality of fibers of the second polymeric material is dispersed in the first polymeric material.

13. The porous composite material of any one of claims 1 to 12, wherein the porous composite material is a filter.

14. A method of filtering a fluid comprising:
providing a filter as claimed in any one of claims 1 to 13; and
passing a fluid through the filter.

15. A method of making a porous composite material as claimed in any one of claims 1 to 13 comprising:
providing a sintered porous substrate comprising a first polymeric material and at least one particle or fiber of a second polymeric material;
providing a solution comprising a third polymeric material dissolved in a solvent;
applying the solution to the porous substrate; and
forming at least one point of attachment between the third polymeric material and the at least one particle or fiber of the second polymeric material.

## Patentansprüche

1. Poröses Verbundmaterial, umfassend:
ein gesintertes poröses Substrat, das ein erstes Polymermaterial und mindestens einen Partikel oder eine Faser eines zweiten Polymermaterials umfasst; und
eine poröse Membran, die ein drittes Polymermaterial umfasst, das auf mindestens einer Oberfläche des zusammengesetzten gesinterten porösen Substrats angeordnet ist und das mindestens einen Befestigungspunkt zu dem/der mindestens einen Partikel oder Faser des zweiten Polymermaterials hat, worin das dritte Polymermaterial keinen Befestigungspunkt mit dem ersten Polymermaterial bildet.

2. Poröses Verbundmaterial nach Anspruch 1, worin das erste Polymermaterial und das zweite Polymermaterial unabhängig voneinander ausgewählt sind aus der Gruppe bestehend aus Fluorpolymeren, Polyamiden, Polyethylenen, Polypropylenen, Polyestern, Polyacrylnitrilen, Polyetherimiden, Polyetheretherketonen, Polysulfonen, Polyethersulfonen, Polyvinylchloriden oder Copolymeren oder Kombinationen davon.

3. Poröses Verbundmaterial nach Anspruch 1 oder 2, worin das erste Polymermaterial eine Vielzahl an Polyethylenpartikeln umfasst.

4. Poröses Verbundmaterial nach einem der Ansprüche 1 bis 3, worin das zweite Polymermaterial Polyvinylidenfluorid umfasst.

5. Poröses Verbundmaterial nach einem der Ansprüche 1 bis 4, worin das dritte Polymermaterial Fluorpolymere, Polyamide, Polyethylene, Polypropylene, Polyester, Polyacrylnitrile, Polyetherimide, Polyetheretherketone, Polysulfone, Polyethersulfone, Polyvinylchloride oder Copolymere oder Kombinationen davon umfasst.

6. Poröses Verbundmaterial nach einem der Ansprüche 1 bis 5, worin das zweite Polymermaterial und das dritte Polymermaterial das gleiche Polymer umfassen.

7. Poröses Verbundmaterial nach einem der Ansprüche 1 bis 6, worin das zweite Polymermaterial und das dritte Polymermaterial Polymere umfassen, die verwandte Monomere umfassen oder aus diesen gebildet werden.

8. Poröses Verbundmaterial nach einem der Ansprüche 1 bis 7, worin das zweite Polymermaterial und das dritte Polymermaterial in einem üblichen Lösungsmittel löslich sind.

9. Poröses Verbundmaterial nach einem der Ansprüche 1 bis 8, worin die mindestens eine Faser eine kontinuierliche Faser oder eine Kurzfaser umfasst.

10. Poröses Verbundmaterial nach einem der Ansprüche 1 bis 9, worin die mindestens eine Faser eine Monokomponentenfaser oder eine Bikomponentenfaser umfasst.

11. Poröses Verbundmaterial nach einem der Ansprüche 1 bis 10, worin das erste Polymermaterial eine Vielzahl an Partikeln, Fasern oder Kombinationen davon umfasst.

12. Poröses Verbundmaterial nach Anspruch 1, worin eine Vielzahl an Partikeln oder eine Vielzahl an Fasern des zweiten Polymermaterials im ersten Polymermaterial verteilt ist.

13. Poröses Verbundmaterial nach einem der Ansprüche 1 bis 12, worin das poröse Verbundmaterial ein Filter ist.

14. Verfahren zum Filtern einer Flüssigkeit, umfassend:
Bereitstellen eines Filters nach einem der Ansprüche 1 bis 13; und
Passieren einer Flüssigkeit durch den Filter.

15. Verfahren zur Herstellung eines porösen Verbundmaterials nach einem der Ansprüche 1 bis 13, umfassend:
Bereitstellen eines gesinterten porösen Substrats, das ein erstes Polymermaterial und mindestens einen Partikel oder eine Faser eines zweiten Polymermaterials umfasst;
Bereitstellen einer Lösung, die ein drittes Polymermaterial umfasst, das in einem Lösungsmittel gelöst ist;
Aufbringen der Lösung auf das poröse Substrat; und
Bilden mindestens eines Befestigungspunkts zwischen dem dritten Polymermaterial und dem/der mindestens einen Partikel oder Faser des zweiten Polymermaterials.

## Revendications

1. Matériau composite poreux comprenant :
un substrat poreux fritté comprenant un premier matériau polymère et au moins une particule ou une fibre d'un deuxième matériau polymère ; et
une membrane poreuse comprenant un troisième matériau polymère disposé sur au moins une surface du substrat composite poreux fritté et possédant au moins un point de fixation sur la au moins une particule ou fibre du deuxième matériau polymère, dans lequel le troisième matériau polymère ne forme pas de point de fixation avec le premier matériau polymère.

2. Matériau composite poreux selon la revendication 1, dans lequel le premier matériau polymère et le second matériau polymère sont choisis indépendamment dans le groupe constitué par les fluoropolymères, les polyamides, les polyéthylènes, les polypropylènes, les polyesters, les polyacrylonitriles, les polyéther imides, les polyétheréther cétones, les polysulfones, les polyéthersulfones, les polychlorures de vinyle, ou leurs copolymères ou leurs combinaisons.

3. Matériau composite poreux selon la revendication 1 ou 2, dans lequel le premier matériau polymère comprend une pluralité de particules de polyéthylène.

4. Matériau composite poreux selon l'une quelconque des revendications 1 à 3, dans lequel le deuxième matériau polymère comprend un polyfluorure de vinylidène.

5. Matériau composite poreux selon l'une quelconque des revendications 1 à 4, dans lequel le troisième matériau polymère comprend des fluoropolymères, des polyamides, des polyéthylènes, des polypropylènes, des polyesters, des polyacrylonitriles, des polyéther imides, des polyétheréther cétones, des polysulfones, des polyéthersulfones, des polychlorures de vinyle, ou leurs copolymères ou leurs combinaisons.

6. Matériau composite poreux selon l'une quelconque des revendications 1 à 5, dans lequel le deuxième matériau polymère et le troisième matériau polymère comprennent le même polymère.

7. Matériau composite poreux selon l'une quelconque des revendications 1 à 6, dans lequel le deuxième matériau polymère et le troisième matériau polymère comprennent des polymères qui comprennent ou qui sont formés à partir de monomères apparentés.

8. Matériau composite poreux selon l'une quelconque des revendications 1 à 7, dans lequel le deuxième matériau polymère et le troisième matériau polymère sont solubles dans un solvant commun.

9. Matériau composite poreux selon l'une quelconque des revendications 1 à 8, dans lequel la au moins une fibre comprend une fibre continue ou une fibre discontinue.

10. Matériau composite poreux selon l'une quelconque des revendications 1 à 9, dans lequel la au moins une fibre comprend une fibre à un composant ou une fibre à deux composants.

11. Matériau composite poreux selon l'une quelconque des revendications 1 à 10, dans lequel le premier matériau polymère comprend une pluralité de particules, de fibres ou leurs combinaisons.

12. Matériau composite poreux selon la revendication 1, dans lequel une pluralité de particules ou une pluralité de fibres du deuxième matériau polymère est dispersée dans le premier matériau polymère.

13. Matériau composite poreux selon l'une quelconque des revendications 1 à 12, dans lequel le matériau composite poreux est un filtre.

14. Procédé de filtration d'un fluide comprenant :
la fourniture d'un filtre selon l'une quelconque des revendications 1 à 13 ; et
le passage d'un fluide à travers le filtre.

15. Procédé de fabrication d'un matériau composite poreux selon l'une quelconque des revendications 1 à 13, comprenant :
la fourniture d'un substrat poreux fritté comprenant un premier matériau polymère et
au moins une particule ou une fibre d'un deuxième matériau polymère ;
la fourniture d'une solution comprenant un troisième matériau polymère dissous dans un solvant ;
l'application de la solution sur le substrat poreux ; et
la formation d'au moins un point de fixation entre le troisième matériau polymère et
la au moins une particule ou fibre du deuxième matériau polymère.
